# EUROPEAN PATENT SPECIFICATION

(11) **EP 3 513 882 B1**
(45) Date of publication and mention of the grant of the patent: **07.06.2023**
(21) Application number: 17850244.9
(22) Date of filing: 12.09.2017
(51) Int. Cl.: B08B 5/02, B29C 48/27, B02C 23/18, B04C 9/00, B04C 5/22, B29C 48/92

(54) **AUTOMATIC CLEANING METHOD AND AUTOMATIC CLEANING SYSTEM UTILIZED IN POWDER COATING PRODUCTION LINE**
AUTOMATISCHES REINIGUNGSVERFAHREN UND AUTOMATISCHES REINIGUNGSSYSTEM IN EINER PULVERBESCHICHTUNGSPRODUKTIONSLINIE
PROCÉDÉ DE NETTOYAGE AUTOMATIQUE ET SYSTÈME DE NETTOYAGE AUTOMATIQUE UTILISÉS DANS UNE LIGNE DE PRODUCTION DE REVÊTEMENT EN POUDRE

(30) Priority: 13.09.2016 CN 201610818463
(43) Date of publication of application: 24.07.2019
(73) Proprietor: Tiger New Surface Materials (Suzhou) Co., Ltd., Taicang Jiangsu 215400 (CN)
(72) Inventor: ZHAI, Chunqin, Suzhou Jiangsu 215400 (CN); MI, Zhenyu, Suzhou Jiangsu 215400 (CN)
(74) Representative: Scholl, Matthias
(86) International application number: PCT/CN2017/101324
(87) International publication number: WO 2018/050042

(56) References cited:
- WO-A1-2007/045259
- CN-A- 103 394 298
- CN-A- 105 599 168
- CN-A- 106 269 708
- CN-U- 203 648 903
- CN-U- 205 394 889
- CN-U- 206 083 290
- US-A- 3 941 315
- US-B2- 6 530 382
- US-B2- 9 294 194
- US-B2- 9 475 099

## Description

The disclosure relates to the field of powder coating manufacturing, and more particularly to an automatic cleaning system for a powder coating production line and a method using the same.

Powder coatings are usually manufactured by a plurality of production lines, and are widely used in different fields because of their variety in colors and performances. To ensure the production efficiency and meet the needs of different customers, the production of different varieties of powder coatings is often performed on the same production line. As a result, the production line must be frequently switched to different modes for producing different powder coatings.

To produce the different varieties of powder coatings (usually with different colors or different performances), the extruder, tablet machine, mill, cyclone separator, sieve, pressure pipelines and other equipment of the production line require washing to ensure that the different varieties of products produced in the production line are prevented from the cross influence in colors and properties, thus improving the quality of each powder coating product.

In the powder coating industry, the equipment on the powder coating production line is often cleaned manually with tools. The manual cleaning includes using resin or non-resin (rice, corn, sawdust, toilet paper and other materials which can be easily crushed), or disassembling the screw and screw barrel to clean the extruder of the powder coating production line. Water washing or blowing method is employed to clean the tablet machine, mill, cyclone separator, sieve, negative pressure pipes on the powder coating production line. Such manual methods would cause a lot of problems, such as accidents and labor costs. Furthermore, when resin is used to clean the extruder, the arbitrary amount of the resin used would lead to waste; disassembling the screw and screw barrel to clean the extruder is time-consuming and labor-consuming, resulting in reduced production efficiency. The frequent disassembly of the machine will also damage the screw and screw barrel and will bring about accidents. The water cleaning method would cause a high humidity inside the equipment and pipelines, thus affecting the quality of the powder coatings, and the equipment components also tend to be corroded, reducing the service life of the equipment. The blowing cleaning requires separating the equipment for blowing, which would produce a lot of dust, affecting the working environment of employees, and posing a risk of dust explosion.

CN103 394 298 A discloses a method of cleaning a powder coating production line.

Therefore, it is necessary to find a way to replace the manual cleaning method of a powder coating production line.

In view of this, one objective of the disclosure is to provide an automatic cleaning method and automatic cleaning system for powder coating production line. The method and system are adapted to eliminate the hidden risks in the process of manual cleaning, save the cleaning time, cause no damage to the equipment of the powder coating production line, and prolong the service life of the equipment; and meanwhile, the operation of the cleaning method and system is on-line monitored. This ensures the efficiency of the automatic cleaning.

The technical schemes adopted by the disclosure are as follows.

Disclosed is a method of automatically cleaning a powder coating production line comprising a first device and a second device, the first device comprising an extruder, and the second device comprising a tablet machine, a mill, a cyclone separator, a sieve, and/or a negative pressure pipeline, the method comprising:
a) receiving, by the first device and the second device, an instruction of automatic cleaning, and allowing the powder coating production line to enter an automatic cleaning mode;
b) cleaning the first device by utilizing a first automatic cleaning tool, and cleaning the second device by utilizing a second automatic cleaning tool, wherein the first automatic cleaning tool comprises a cleaning material, and the second automatic cleaning tool comprises an automatic blowing device;
c) monitoring, according to a preset monitoring condition and by a monitoring device, whether b) is completed;
d) stopping the automatic cleaning when the monitoring device indicates b) has been completed; and
e) terminating the automatic cleaning mode.

Preferably, the extruder is cleaned as follows:
a10) receiving, by the extruder, an instruction of automatic cleaning, allowing the extruder to enter an automatic cleaning mode;
b10) feeding, by a feeding machine disposed on the extruder, the cleaning material having a standard cleaning volume to the extruder, and automatically cleaning the extruder by the cleaning material;
c10) monitoring, according to a preset monitoring condition and by a monitoring device, whether b10) is completed;
d10) stopping the automatic cleaning of the extruder when the monitoring device indicates b) has been completed; and
e10) terminating the work of the extruder to turn off the automatic cleaning mode.

Preferably, the preset monitoring condition is a monitoring parameter with regard to the extruder and the feeding machine; when a monitoring result of the monitoring device conforms to the monitoring parameter, it is determined that b10) is completed.

Preferably, the monitoring parameter comprises a current and/or torque and/or rotational speed of the extruder and the feeding machine.

Preferably, the second device of the powder coating production line is cleaned as follows:
a20) receiving, by the second device of the powder coating production line, an instruction of automatic cleaning, and allowing the second device to enter an automatic cleaning mode;
b20) blowing, by the automatic blowing device, the second device of the powder coating production line, and removing dust of the second device by a suction fan of the powder coating production line;
c20) monitoring, according to a preset monitoring condition and by the monitoring device, whether b20) is completed;
d20) stopping the blowing when the monitoring device indicates b20) has been completed; and
e20) turning off the automatic cleaning mode.

Preferably, the preset monitoring condition comprises a blowing time of the automatic blowing device; when a monitoring result of the monitoring device shows the blowing time is satisfied, it is determined that b20) is completed.

The disclosure also provides an automatic cleaning system adapted to clean a powder coating production line according to the aforesaid method.

Preferably, the powder coating production line comprises an extruder, a tablet machine, a mill, a cyclone separator, a sieve, a negative pressure pipeline, and a feeding machine; wherein the feeding machine is connected to an input end of the extruder, and an output end of the extruder is coupled to the tablet machine; the tablet machine, the mill, the cyclone separator, and the sieve are connected sequentially via the negative pressure pipeline; the negative pressure pipeline is connected to a suction fan; the extruder is cleaned using the aforesaid method; and the tablet machine, the mill, the cyclone separator, the sieve and the negative pressure pipeline are cleaned using the aforesaid method.

This disclosure provides an automatic cleaning method and system for a powder coating production line. The method and system employ an automatic cleaning tool to clean the powder coating production line and employ a monitoring device to monitor the automatic cleaning according to the preset monitoring conditions; once the cleaning process is completed, automatic mode is closed. The method and system are adapted to eliminate the hidden risks in the process of manual cleaning, save the cleaning time, cause no damage to the equipment of the powder coating production line, and prolong the service life of the equipment; and meanwhile, the operation of the cleaning method and system is on-line monitored. This ensures the efficiency of automatic cleaning.

FIG. 1 is a flow chart of a method of automatically cleaning a powder coating production line according to one embodiment of the disclosure;

FIG. 2 is a method of cleaning an extruder of a powder coating production line according to one embodiment of the disclosure;

FIG. 3 is a structure diagram of an extruder of a powder coating production line according to one embodiment of the disclosure;

FIG. 4 is a method of cleaning a second device of the powder coating production line according to one embodiment of the disclosure;

FIG. 5 is a front view of a tablet machine of a powder coating production line according to one embodiment of the disclosure;

FIG. 6 is a side view of a tablet machine of a powder coating production line according to one embodiment of the disclosure;

FIG. 7 is a structure diagram of a mill of a powder coating production line according to one embodiment of the disclosure;

FIG. 8 is a structure diagram of a cyclone separator of a powder coating production line according to one embodiment of the disclosure;

FIG. 9 is a structure diagram of a sieve of a powder coating production line according to one embodiment of the disclosure; and

FIG. 10 is a structure diagram of a negative pressure pipeline of a powder coating production line according to one embodiment of the disclosure.

To make the staff in this technical field understand the technical scheme of the invention, the below will describe the technical scheme clearly and entirely of the invention with the picture in the invention. Obviously, the described implementation is only the part of the implementation of the invention, not the full implementation. Based on the implementation of the invention, all the implementation that ordinary technical staff acquire before making some creative achievements in this field, is supposed to belong to the scope of the invention.

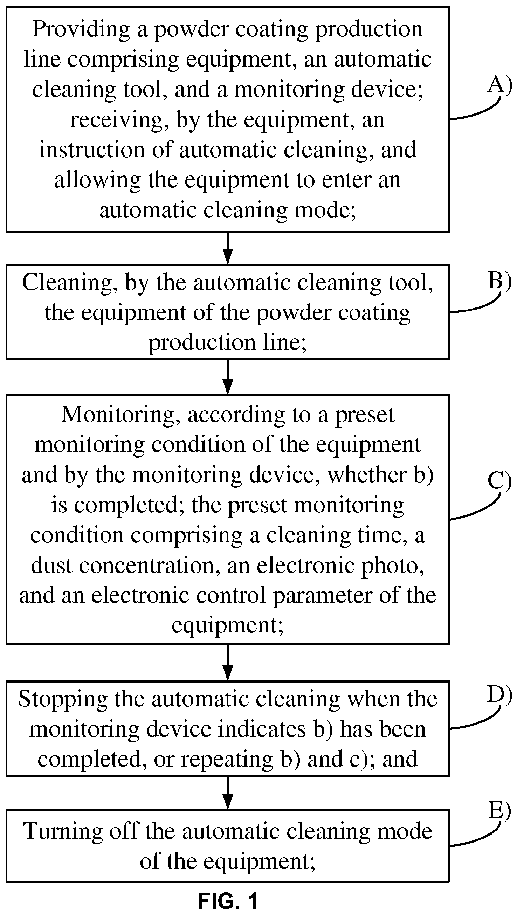

As shown in FIG. 1, provided is an automatic cleaning method for a powder coating production line, the method comprising:
a) providing a powder coating production line comprising equipment, receiving, by the equipment, an instruction of automatic cleaning, and allowing the equipment to enter an automatic cleaning mode;
b) cleaning, by an automatic cleaning tool, the equipment of the powder coating production line;
c) monitoring, according to a preset monitoring condition and by a monitoring device, whether b) is completed;
d) stopping the automatic cleaning when the monitoring device indicates b) has been completed; and
e) terminating the automatic cleaning mode.

According to the invention, the automatic cleaning tool comprises a first automatic cleaning tool adapted to clean a first device of the powder coating production line, and a second automatic cleaning tool adapted to clean a second device of the powder coating production line; the first automatic cleaning tool comprises a cleaning material, and the second automatic cleaning tool comprises an automatic blowing device. Specifically, the first device comprises an extruder, and the second device comprises a tablet machine, a mill, a cyclone separator, a sieve, and/or a negative pressure pipeline. Preferably, the second device comprises a tablet machine, a mill, a cyclone separator, a screen, and a negative pressure pipeline, so that the powder coating production line can be cleaned completely. Optionally, in other implementations, technicians in the field can select or combine a method of cleaning the extruder, a method of cleaning the tablet machine, a method of cleaning the mill, a method of cleaning the cyclone separator, a method of cleaning the screen, and a method of cleaning the negative pressure pipeline.

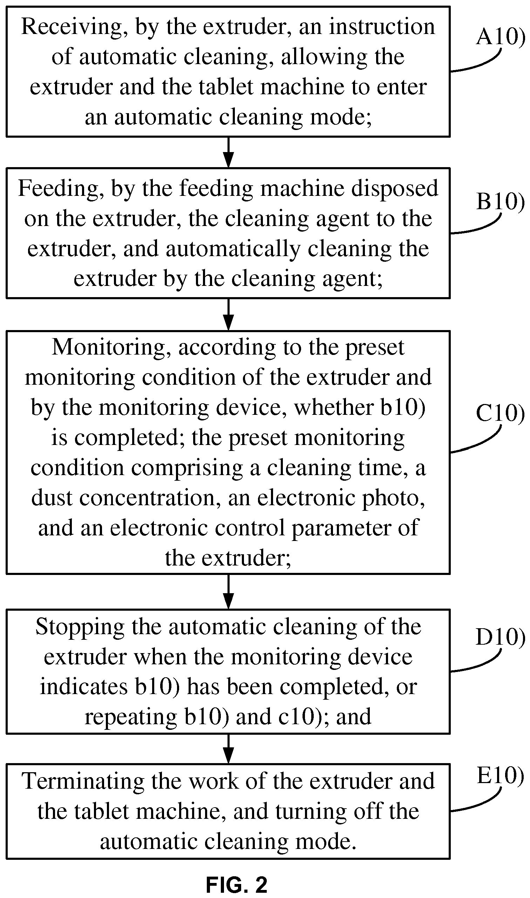

Preferably, as shown in FIG. 2, in a specific implementation, the extruder is cleaned as follows:
a10) receiving, by the extruder, an instruction of automatic cleaning, allowing the extruder to enter an automatic cleaning mode;
b10) feeding, by a feeding machine disposed on the extruder, the cleaning material having a standard cleaning volume to the extruder, and automatically cleaning the extruder by the cleaning material;
c10) monitoring, according to a preset monitoring condition and by a monitoring device, whether b10) is completed; preferably, the preset monitoring condition comprises a monitoring parameter with regard to the extruder and the feeding machine; when a monitoring result of the monitoring device conforms to the monitoring parameter, it is determined that b10) is completed; the monitoring parameter comprises current and/or torque and/or rotational speed; specifically, the monitoring parameter comprises current and torque.
d10) stopping the automatic cleaning of the extruder when the monitoring device indicates b) has been completed; and
e10) terminating the work of the extruder, and turning off the automatic cleaning mode.

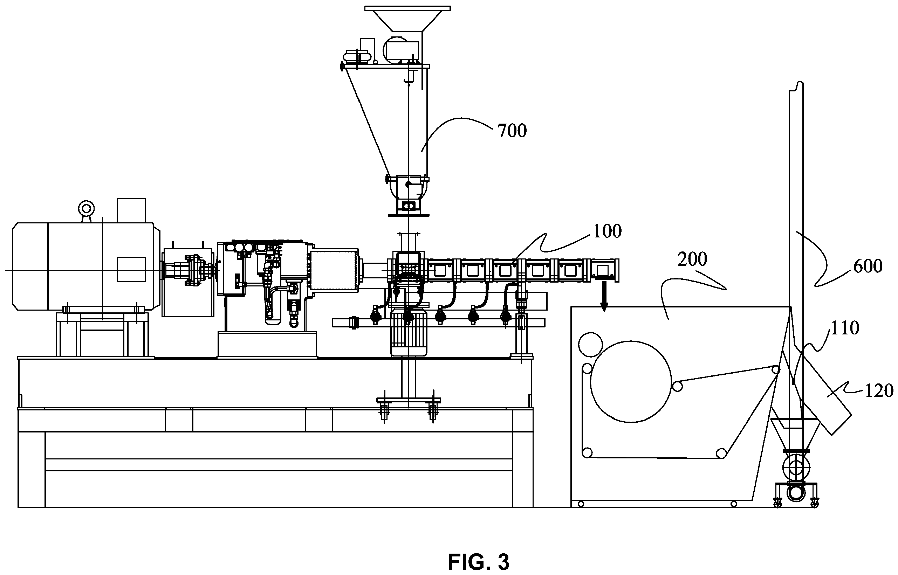

FIG. 3 shows a structure diagram of an extruder in the being automatically cleaned state. The feeding machine 700 is connected to an input end of the extruder 100, and an output end of the extruder is coupled to the tablet machine 200. Preferably, in this implementation, the cleaning material is a mixture of resin and filler. A valve 110 is connected to an outlet of the extruder, and the other end of the valve 110 is connected to a collector 120 adapted to collect the cleaning waste, thus achieving the automatic collection of the cleaning waster, and improving the automatic cleaning of the extruder 100.

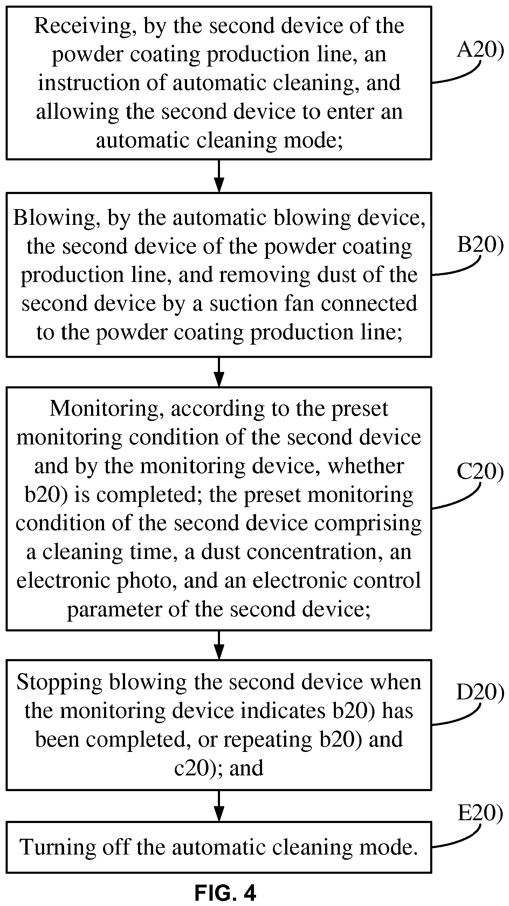

Preferably, as shown in FIG. 4, the second device of the powder coating production line is cleaned as follows:
a20) receiving, by the second device of the powder coating production line, an instruction of automatic cleaning, and allowing the second device to enter an automatic cleaning mode;
b20) blowing, by the automatic blowing device, the second device of the powder coating production line, and removing dust of the second device by a suction fan of the powder coating production line;
c20) monitoring, according to a preset monitoring condition and by the monitoring device, whether b20) is completed; specifically, the preset monitoring condition comprises a blowing time of the automatic blowing device; when a monitoring result of the monitoring device shows the blowing time is satisfied, it is determined that b20) is completed;
d20) stopping the blowing when the monitoring device indicates b20) has been completed; and
e20) turning off the automatic cleaning mode.

Also provided is an automatic cleaning system, being adapted to clean a powder coating production line according to the aforesaid method.

As shown in FIG. 3 and FIGS. 5-10, the automatic cleaning system for equipment of a powder coating production line is provided. The equipment comprises an extruder 100, a tablet machine 200, a mill 300, a cyclone separator 400, a sieve 500, a negative pressure pipeline 600. The input end of the extruder 100 is provided with a feeding machine 700, and the output end of the extruder is coupled to the tablet machine 200. The tablet machine 200, the mill 300, the cyclone separator 400, and the sieve 500 are connected sequentially via the negative pressure pipeline 600. The negative pressure pipeline 600 is connected to a suction fan (not shown in the figure). The tablet machine 200, the mill 300, the cyclone separator 400, the sieve 500 and the negative pressure pipeline 600 each are provided with one or more automatic blowing devices. All the automatic blowing devices are connected to a control device. The control device is adapted to control the automatic blowing device to automatically start or stop the blowing operation. Specifically, in the implementation of the disclosure, the control device controls the automatic blowing device to clean the second device of the powder coating production line according to aforesaid method.

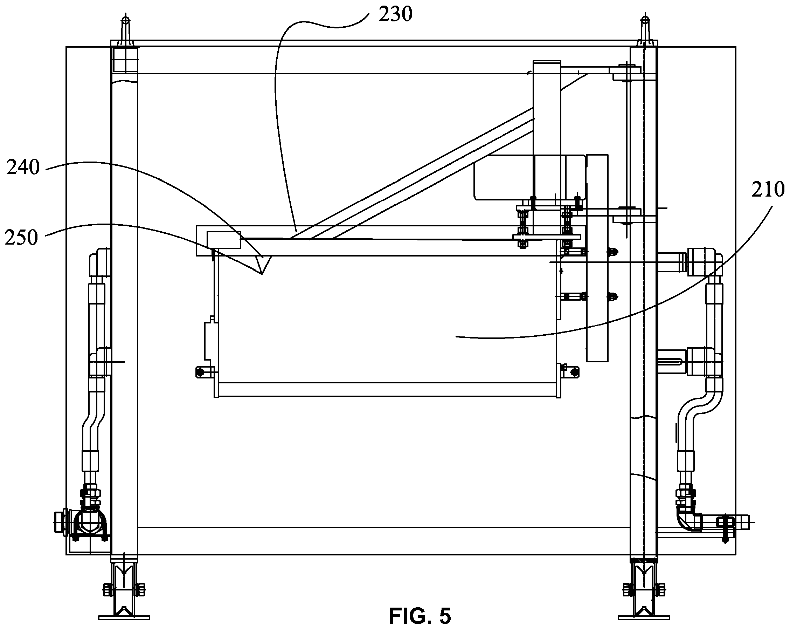

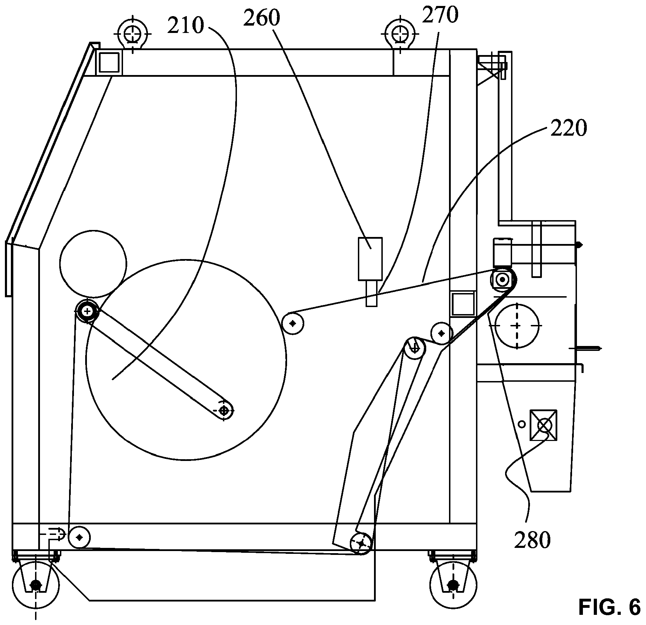

Preferably, as shown in FIG. 5, the tablet machine 200 comprises a cooling roller 210 and a cooling belt 220 connected to the cooling roller (see FIG. 6). The tablet machine comprises an automatic blowing device comprising a cylinder 230 and a sliding block 240 arranged on the cylinder. The cylinder 230 is fixed at the joint of the cooling roller 210 and the cooling belt 220. A blowing nozzle 250 is fixed on the sliding block 240. Preferably, the sliding length of the cylinder 230 is the same as the length of the cooling roller 210. For example, the length is 1000 mm. The diameter of the blowing nozzle 250 is preferably 5 mm. When the automatic cleaning mode starts, the cylinder 230 is driven by the sliding block 240 to drive the blowing nozzle 250 to slide back and forth in the sliding rail of the cylinder 230 to ensure the automatic cleaning of the cooling roller 210 and the cooling belt 220. Further preferably, in this implementation, the tablet machine 200 comprise a rotary valve 280 (see FIG. 6) adapted to lifting the cleaning material. The rotary valve is automatically opened and closed. When the tablet machine 200 is in an automatic cleaning mode, the valve element of the rotary valve 280 is automatically withdrawn, and a suction fan connected to the negative pressure pipe 600 starts to work, achieving the negative pressure dust collection for the tablet machine 200, avoiding safety risks of the tablet machine 200 caused by the dust diffusion in the automatic cleaning process; preferably, as shown in FIG. 6, the surface of the cooling belt 220 is provided with an automatic cleaning device. The automatic cleaning device comprises a cylinder 260 and a washing sponge 270 fixed on the cylinder. The cleaning sponge 270 is disposed between the cylinder 260 and the surface of the cooling belt 220.

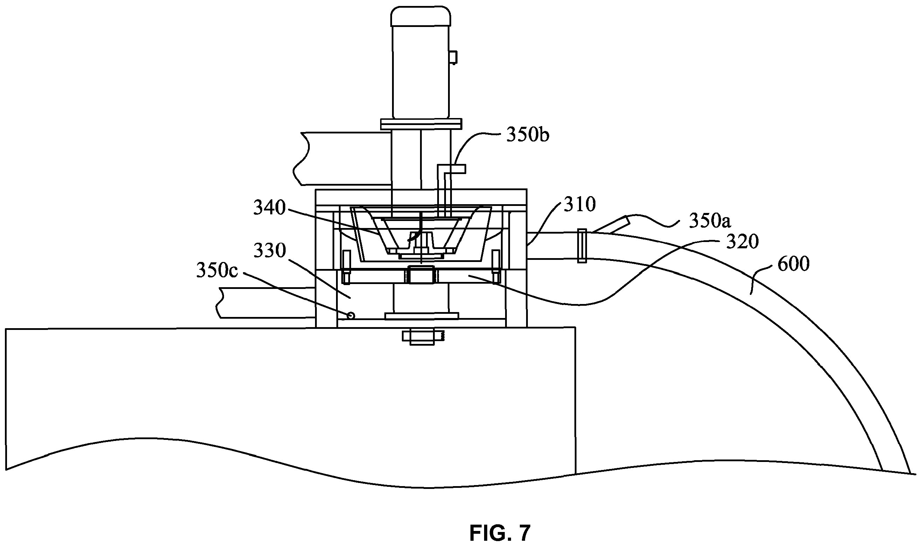

Preferably, as shown in FIG. 7, the mill 300 comprises a feed port 310, a disc 320, a cooling chamber 330 and a separating fan 340. The automatic blowing devices 350a, 350b and 350c are installed on the feed port 310, the top of the separating fan 340 and the cooling chamber 330, respectively. When the mill 300 is in the automatic cleaning mode, the automatic blowing devices 350a, 350b, 350b sequentially clean the disc 320, the separating fan 340 and the cooling chamber 330, and meanwhile, the suction fan connected to the negative pressure pipeline 600 starts, so that no dust is diffused in the automatic cleaning process of the mill 300.

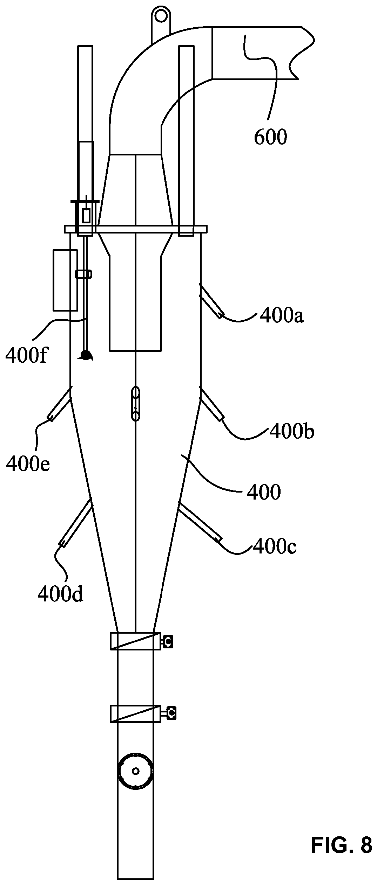

Preferably, as shown in FIG. 8, the automatic blowing devices 410 of the cyclone separator are of automatic rotary type and are installed in the chamber of the cyclone separator 400; the number of the automatic blowing devices 410 can be 3-8, and are installed in different positions of the chamber of the cyclone separator 400. As shown in FIG. 8, six automatic blowing devices 410a, 410b, 410c, 410d, 410e and 410f of the cyclone separator are disposed; when the automatic cleaning mode of the cyclone separator 400 starts, the control device controls the automatic blowing devices 410a, 410b, 410c, 410d, 410e and 410f on the chamber of the cyclone separator 400 to blow automatically, to achieve automatic cleaning. And meanwhile, the suction fan connected to the negative pressure pipe 600 starts to work, so that no dust is diffused in the automatic cleaning process of the cyclone separator 400.

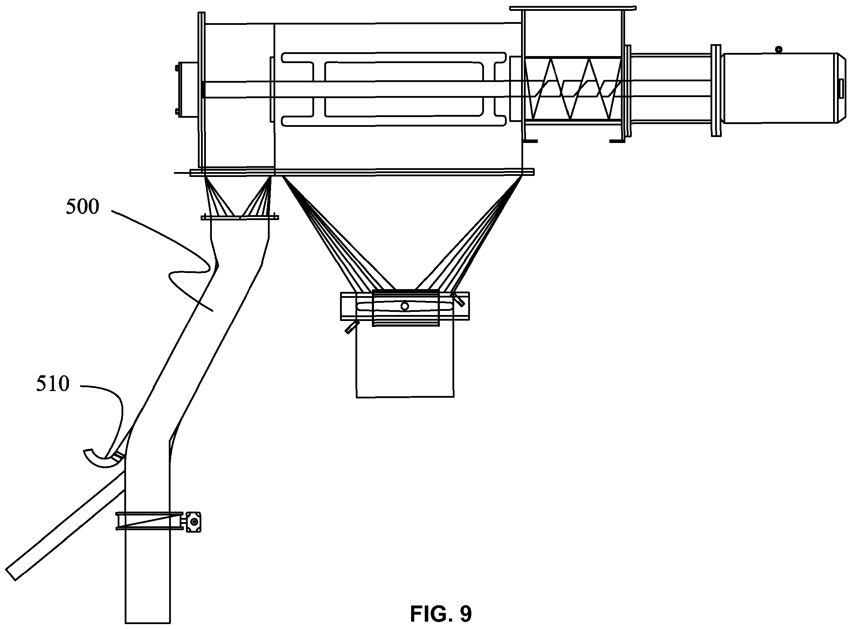

Preferably, as shown in FIG. 9, the sieve 500 comprises an automatic valve which facilitates the automatic powder delivery in the cleaning process of the sieve 500. The sieve 500 comprises an automatic blowing device 510 which is disposed in the sieve 500. When the sieve 500 is in the automatic cleaning mode, the control device controls the automatic blowing device 510 to blow air to the sieve 500, achieving the automatic cleaning of the sieve; and meanwhile, the suction fan connected to the negative pressure pipe 600 starts to work, so that t no dust is diffused in the automatic cleaning process of the sieve 500.

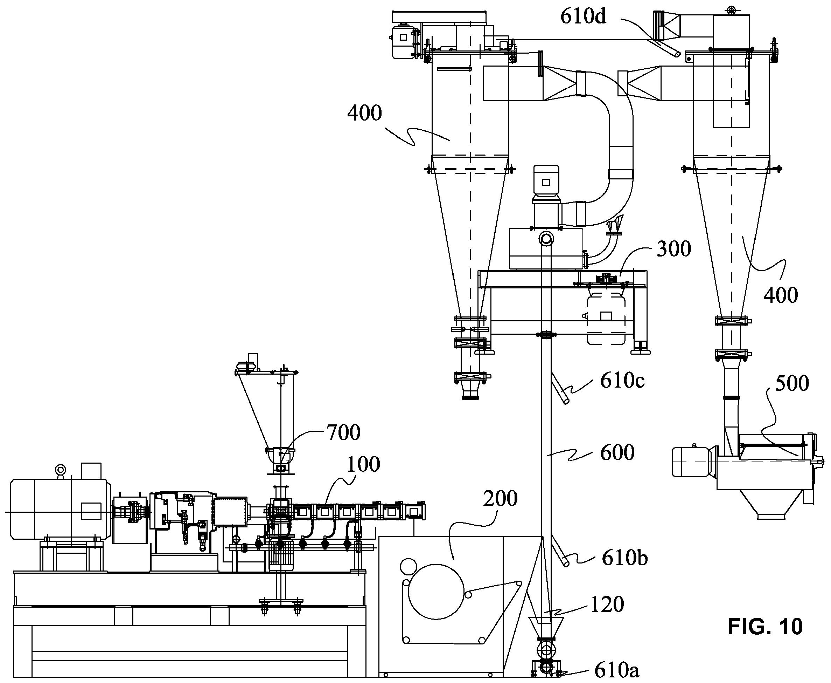

Preferably, as shown in FIG. 10, the negative pressure pipe comprises 3-10 automatic blowing devices 610 which are installed on the different parts of the negative pressure pipe 600, for example, the automatic blowing devices 610a, 610b, 610c and 610d; when the negative pressure pipe 600 is in the automatic cleaning mode, the control device controls the automatic blowing devices 610 of the negative pressure pipe to blow air to the negative pressure pipe 600 for automatic blowing. And meanwhile, the suction fan connected to the negative pressure pipe 600 starts to work, so that no dust is diffused in the automatic cleaning process of the negative pressure pipe 600.

In the process of automatic cleaning, a program can automatically control a number of strong blowing devices on the negative pressure pipeline, and clean the inner parts of the pipeline. During the cleaning process, the suction fan works continuously for dust removal, so that no dust is diffused.

It should be noted that the number and installation location of the automatic blowing devices in the specific embodiment of the present invention is one of the preferred embodiments of the invention. In other embodiments, the technical personnel in the field can select the number and installation location of the automatic blowing devices according to the specific needs to achieve better automatic cleaning effect. Specific embodiments are no longer described one by one.

It will be obvious to those skilled in the art that changes and modifications may be made, and therefore, the aim in the appended claims is to cover all such changes and modifications.

### Industrial applicability

This disclosure provides an automatic cleaning method and system for a powder coating production line. The method and system employ an automatic cleaning tool to clean the powder coating production line and employ a monitoring device to monitor the automatic cleaning according to the preset monitoring conditions; once the cleaning process is completed, automatic mode is turned off. The method and system are adapted to eliminate the hidden risks in the process of manual cleaning, save the cleaning time, cause no damage to the equipment of the powder coating production line, and prolong the service life of the equipment; and meanwhile, the operation of the cleaning method and system is on-line monitored. This ensures the efficiency of automatic cleaning.

## Claims

1. A method of automatically cleaning a powder coating production line comprising a first device and a second device, the first device comprising an extruder (100), and the second device comprising a tablet machine (200), a mill (300), a cyclone separator (400), a sieve (500), and/or a negative pressure pipeline (600), the method comprising:
a) receiving an instruction of automatic cleaning, by the first device and the second device, and allowing the powder coating production line to enter an automatic cleaning mode;
b) cleaning the first device by utilizing a first automatic cleaning tool, and cleaning the second device by utilizing a second automatic cleaning tool, wherein the first automatic cleaning tool comprises a cleaning material, and the second automatic cleaning tool comprises an automatic blowing device (350a-350c);
c) monitoring, according to a preset monitoring condition and by a monitoring device, whether b) is completed;
d) stopping the automatic cleaning when the monitoring device indicates b) has been completed; and
e) turning off the automatic cleaning mode of the first device and the second device.

2. The method of claim 1, **characterized in that** a feeding machine (700) is connected to an input end of the extruder (100), and an output end of the extruder (100) is coupled to the tablet machine (200), a valve (110) is connected to an outlet of the extruder (100), and the other end of the valve (110) is connected to a collector (120) adapted to collect the cleaning waste, wherein the cleaning material is a mixture of a resin and a filler.

3. The method of claim 1, **characterized in that** the extruder (100) is cleaned as follows:
a10) receiving, by the extruder (100), an instruction of automatic cleaning, allowing the extruder (100) to enter an automatic cleaning mode
b10) feeding, by a feeding machine (700) disposed on the extruder (100), the cleaning material having a standard cleaning volume to the extruder (100), and automatically cleaning the extruder (100) by the cleaning material
c10) monitoring, according to a preset monitoring condition and by a monitoring device, whether b10) is completed;
d10) stopping the automatic cleaning of the extruder (100) when the monitoring device indicates b) has been completed; and
e10) terminating the work of the extruder (100), and turning off the automatic cleaning mode.

4. The method of claim 3, **characterized in that** the preset monitoring condition comprises a monitoring parameter with regard to the extruder (100) and the feeding machine (700); when a monitoring result of the monitoring device conforms to the monitoring parameter, it is determined that b10) is completed.

5. The method of claim 4, **characterized in that** the monitoring parameter comprises current and/or torque and/or rotational speed of the extruder (100) and the feeding machine (700).

6. The method of claim 1, **characterized in that** the second device of the powder coating production line is cleaned as follows:
a20) receiving, by the second device of the powder coating production line, an instruction of automatic cleaning, and allowing the second device to enter an automatic cleaning mode;
b20) blowing, by the automatic blowing device (350a-350c), the second device of the powder coating production line, and removing dust of the second device by a suction fan of the powder coating production line;
c20) monitoring, according to a preset monitoring condition and by the monitoring device, whether b20) is completed;
d20) stopping the blowing when the monitoring device indicates b20) has been completed; and
e20) turning off the automatic cleaning mode.

7. The method of claim 6, **characterized in that** the preset monitoring condition comprises a blowing time of the automatic blowing device (350a-350c);
when a monitoring result of the monitoring device shows the blowing time is satisfied, it is determined that b20) is completed.

8. An automatic cleaning system, being adapted to clean a powder coating production line according to the method of any one of claims 1-7.

9. The system of claim 8, wherein the power coating production line comprises the extruder (100), the table machine (200), the mill (300), the cyclone separator (400), the sieve (500) and the negative pressure pipeline (600), and a feeding machine (700); wherein the feeding machine (700) is connected to an input end of the extruder (100), and an output end of the extruder (100) is coupled to the tablet machine (200); the tablet machine (200), the mill (300), the cyclone separator (400), and the sieve (500) are connected sequentially via the negative pressure pipeline (600); the negative pressure pipeline (600) is connected to a suction fan

## Patentansprüche

1. Verfahren zum automatischen Reinigen einer Pulverbeschichtungsproduktionslinie, die eine erste Vorrichtung und eine zweite Vorrichtung umfasst, wobei die erste Vorrichtung einen Extruder (100) umfasst,
und die zweite Vorrichtung eine Tablettiermaschine (200), eine Mühle (300), einen Zyklonabscheider (400), ein Sieb (500) und/oder eine Unterdruckleitung (600) umfasst, wobei das Verfahren umfasst:
a) Empfangen einer Anweisung zum automatischen Reinigen durch die erste Vorrichtung und die zweite Vorrichtung und Ermöglichen, dass die Pulverbeschichtungsproduktionslinie in einen automatischen Reinigungsmodus wechselt;
b) Reinigen der ersten Vorrichtung unter Verwendung eines ersten automatischen Reinigungswerkzeugs und Reinigen der zweiten Vorrichtung unter Verwendung eines zweiten automatischen Reinigungswerkzeugs, wobei das erste automatische Reinigungswerkzeug ein Reinigungsmaterial umfasst und das zweite automatische Reinigungswerkzeug eine automatische Blasvorrichtung (350a-350c) umfasst;
c) Überwachen gemäß einer voreingestellten Überwachungsbedingung und durch eine Überwachungsvorrichtung, ob b) abgeschlossen ist;
d) Stoppen des automatischen Reinigens, wenn die Überwachungsvorrichtung angibt, dass b) abgeschlossen ist; und
e) Ausschalten des automatischen Reinigungsmodus der ersten Vorrichtung und der zweiten Vorrichtung.

2. Verfahren nach Anspruch 1, **dadurch gekennzeichnet, dass** eine Zuführmaschine (700) mit einem Eingabeende des Extruders (100) verbunden ist und ein Ausgangsende des Extruders (100) mit der Tablettiermaschine (200) gekoppelt ist, ein Ventil (110) mit einem Auslass des Extruders (100) verbunden ist und das andere Ende des Ventils (110) mit einem Sammler (120) verbunden ist, der ausgelegt ist, um den Reinigungsabfall zu sammeln, wobei das Reinigungsmaterial eine Mischung aus einem Harz und einem Füllstoff ist.

3. Verfahren nach Anspruch 1, **dadurch gekennzeichnet, dass** der Extruder (100) wie folgt gereinigt wird:
a10) Empfangen einer Anweisung zum automatischen Reinigen durch den Extruder (100), was es dem Extruder (100) ermöglicht, in einen automatischen Reinigungsmodus zu wechseln;
b10) Zuführen, durch eine Zuführmaschine (700), die an dem Extruder (100) angeordnet ist, des Reinigungsmaterials mit einem Standard-Reinigungsvolumen zu dem Extruder (100) und
automatisches Reinigen des Extruders (100) durch das Reinigungsmaterial;
c10) Überwachen gemäß einer voreingestellten Überwachungsbedingung und durch eine Überwachungsvorrichtung, ob b10) abgeschlossen ist;
d10) Stoppen des automatischen Reinigens des Extruders (100), wenn die Überwachungsvorrichtung angibt, dass b) abgeschlossen ist; und
e10) Beenden der Arbeit des Extruders (100) und Abschalten des automatischen Reinigungsmodus.

4. Verfahren nach Anspruch 3, **dadurch gekennzeichnet, dass** die voreingestellte Überwachungsbedingung einen Überwachungsparameter bezüglich des Extruders (100) und der Zuführmaschine (700) umfasst;
wenn ein Überwachungsergebnis der Überwachungsvorrichtung mit dem Überwachungsparameter übereinstimmt, bestimmt wird, dass b10) abgeschlossen ist.

5. Verfahren nach Anspruch 4, **dadurch gekennzeichnet, dass** der Überwachungsparameter Strom und/oder Drehmoment und/oder Drehzahl des Extruders (100) und der Zuführmaschine (700) umfasst.

6. Verfahren nach Anspruch 1, **dadurch gekennzeichnet, dass** die zweite Vorrichtung der Pulverbeschichtungsproduktionslinie wie folgt gereinigt wird:
a20) Empfangen einer Anweisung zum automatischen Reinigen durch die zweite Vorrichtung der Pulverbeschichtungsproduktionslinie und Ermöglichen, dass die zweite Vorrichtung in einen automatischen Reinigungsmodus wechselt;
b20) Ausblasen, durch die automatische Blasvorrichtung (350a-350c), der zweiten Vorrichtung der Pulverbeschichtungsproduktionslinie und Entfernen von Staub von der zweiten Vorrichtung durch ein Sauggebläse der Pulverbeschichtungsproduktionslinie;
c20) Überwachen gemäß einer voreingestellten Überwachungsbedingung und durch die Überwachungsvorrichtung, ob b20) abgeschlossen ist;
d20) Stoppen des Ausblasens, wenn die Überwachungsvorrichtung angibt, dass b20) abgeschlossen ist; und
e20) Ausschalten des automatischen Reinigungsmodus.

7. Verfahren nach Anspruch 6, **dadurch gekennzeichnet, dass** die voreingestellte Überwachungsbedingung eine Blaszeit der automatischen Blasvorrichtung (350a-350c) umfasst;
wenn ein Überwachungsergebnis der Überwachungsvorrichtung zeigt, dass die Blaszeit erfüllt ist, bestimmt wird, dass b20) abgeschlossen ist.

8. Automatisches Reinigungssystem, das ausgelegt ist, um eine Pulverbeschichtungsproduktionslinie gemäß dem Verfahren nach einem der Ansprüche 1-7 zu reinigen.

9. System nach Anspruch 8, wobei die Pulverbeschichtungsproduktionslinie den Extruder (100), die Tischmaschine (200), die Mühle (300), den Zyklonabscheider (400), das Sieb (500) und die Unterdruckleitung (600) und eine Zuführmaschine (700) umfasst; wobei die Zuführmaschine (700) mit einem Eingabeende des Extruders (100) verbunden ist und ein Ausgangsende des Extruders (100) mit der Tablettiermaschine (200) gekoppelt ist; die Tablettiermaschine (200), die Mühle (300), der Zyklonabscheider (400) und das Sieb (500) nacheinander über die Unterdruckleitung (600) verbunden sind; die Unterdruckleitung (600) mit einem Sauggebläse verbunden ist.

## Revendications

1. Procédé de nettoyage automatique d'une ligne de production de thermolaquage comprenant un premier dispositif et un second dispositif, le premier dispositif comprenant une extrudeuse (100), et le second dispositif comprenant une machine à comprimés (200), un broyeur (300), un séparateur à cyclone (400), un tamis (500) et/ou une canalisation à pression négative (600), le procédé comprenant :
a) la réception d'une instruction de nettoyage automatique, par le premier dispositif et le second dispositif, et permettant à la ligne de production de thermolaquage d'entrer dans un mode de nettoyage automatique ;
b) le nettoyage du premier dispositif en utilisant un premier outil de nettoyage automatique, et le nettoyage du second dispositif en utilisant un second outil de nettoyage automatique, dans lequel le premier outil de nettoyage automatique comprend un matériau de nettoyage, et le second outil de nettoyage automatique comprend un dispositif de soufflage automatique (350a-350c) ;
c) la surveillance, en fonction d'une condition de surveillance prédéfinie et par un dispositif de surveillance, si l'étape b) est terminée ;
d) l'arrêt du nettoyage automatique lorsque le dispositif de surveillance indique que l'étape b) a été terminée ; et
e) la coupure du mode de nettoyage automatique du premier dispositif et du second dispositif.

2. Procédé selon la revendication 1, **caractérisé en ce qu'**une machine d'alimentation (700) est connectée à une extrémité d'entrée de l'extrudeuse (100), et une extrémité de sortie de l'extrudeuse (100) est couplée à la machine à comprimés (200), une soupape (110) est connectée à une sortie de l'extrudeuse (100), et l'autre extrémité de la soupape (110) est connectée à un collecteur (120) adapté pour collecter les déchets de nettoyage, dans lequel le matériau de nettoyage est un mélange d'une résine et d'une charge.

3. Procédé selon la revendication 1, **caractérisé en ce que** l'extrudeuse (100) est nettoyée comme suit :
a10) réception, par l'extrudeuse (100), d'une instruction de nettoyage automatique, permettant à l'extrudeuse (100) d'entrer en mode de nettoyage automatique
b10) alimentation, par une machine d'alimentation (700) disposée sur l'extrudeuse (100), du matériau de nettoyage ayant un volume de nettoyage standard à l'extrudeuse (100), et nettoyage automatique de l'extrudeuse (100) par le matériel de nettoyage
c10) surveillance, en fonction d'une condition de surveillance prédéfinie et par un dispositif de surveillance, si l'étape b10) est terminée ;
d10) arrêt du nettoyage automatique de l'extrudeuse (100) lorsque le dispositif de surveillance indique que l'étape b) a été terminée ; et
e10) cessation du travail de l'extrudeuse (100), et coupure du mode de nettoyage automatique.

4. Procédé selon la revendication 3, **caractérisé en ce que** la condition de surveillance prédéfinie comprend un paramètre de surveillance concernant l'extrudeuse (100) et la machine d'alimentation (700) ;
lorsqu'un résultat de surveillance du dispositif de surveillance est conforme au paramètre de surveillance, il est déterminé que l'étape b10) est terminée.

5. Procédé selon la revendication 4, **caractérisé en ce que** le paramètre de surveillance comprend le courant et/ou le couple et/ou la vitesse de rotation de l'extrudeuse (100) et de la machine d'alimentation (700).

6. Procédé selon la revendication 1, **caractérisé en ce que** le second dispositif de la ligne de production de thermolaquage est nettoyé comme suit :
a20) réception, par le second dispositif de la ligne de production de thermolaquage, d'une instruction de nettoyage automatique, et autorisation au second dispositif d'entrer en mode de nettoyage automatique ;
b20) soufflage, par le dispositif de soufflage automatique (350a-350c), du second dispositif de la ligne de production de thermolaquage, et dépoussiérage du second dispositif par un ventilateur aspirant de la ligne de production de thermolaquage ;
c20) surveillance, en fonction d'une condition de surveillance prédéfinie et par le dispositif de surveillance, si l'étape b20) est terminée ;
d20) arrêt du soufflage lorsque le dispositif de surveillance indique que l'étape b20) a été terminée ; et
e20) coupure du mode de nettoyage automatique.

7. Procédé selon la revendication 6, **caractérisé en ce que** la condition de surveillance prédéfinie comprend un temps de soufflage du dispositif de soufflage automatique (350a-350c) ; lorsqu'un résultat de surveillance du dispositif de surveillance indique que le temps de soufflage est satisfait, il est déterminé que l'étape b20) est terminée.

8. Système de nettoyage automatique, adapté pour nettoyer une ligne de production de thermolaquage selon le procédé de l'une quelconque des revendications 1 à 7.

9. Système selon la revendication 8, dans lequel la ligne de production de thermolaquage comprend l'extrudeuse (100), la machine à table (200), le broyeur (300), le séparateur à cyclone (400), le tamis (500) et la canalisation à pression négative (600) et une machine d'alimentation (700) ; dans lequel la machine d'alimentation (700) est connectée à une extrémité d'entrée de l'extrudeuse (100) et une extrémité de sortie de l'extrudeuse (100) est couplée à la machine à comprimés (200) ; la machine à comprimés (200), le broyeur (300), le séparateur à cyclone (400) et le tamis (500) sont connectés séquentiellement via la canalisation à pression négative (600) ; la canalisation à pression négative (600) est connectée à un ventilateur aspirant.
